# FASCICULE DE BREVET EUROPEEN

(11) **EP 3 422 555 B1**
(45) Date de publication et mention de la délivrance du brevet: **04.08.2021**
(21) Numéro de dépôt: 18178861.3
(22) Date de dépôt: 20.06.2018
(51) Int. Cl.: H02M 7/5388, H02M 7/797

(54) **CONVERTISSEUR AC/DC RÉVERSIBLE À TRIACS**
REVERSIBLER AC/DC-WANDLER MIT TRIACS
REVERSIBLE AC/DC CONVERTER WITH TRIACS

(30) Priorité: 30.06.2017 FR 1756179
(43) Date de publication de la demande: 02.01.2019
(73) Titulaire: STMicroelectronics (Tours) SAS, 37100 Tours (FR)
(72) Inventeur: BENABDELAZIZ, Ghafour, 37700 Tours (FR); REYMOND, Cédric, 37100 Tours (FR); JOUVE, David, 37360 Saint-Antoine-Du Rocher (FR)
(74) Mandataire: Cabinet Beaumont

(56) Documents cités:
- FR-A1- 2 315 794
- US-A1- 2015 131 343

## Description

### Domaine

La présente demande concerne de façon générale les circuits électroniques et, plus particulièrement, les convertisseurs à découpage dits à sortie totem pole, ou cascode à point milieu.

### Exposé de l'art antérieur

Les convertisseurs à découpage sont utilisés dans de nombreuses applications et on connait de nombreux types de convertisseurs.

Parmi les convertisseurs alternatif-continu, on connait de nombreuses architectures à pont de redressement et d'autres architectures sans pont, basées sur la commutation de deux transistors (généralement MOS) montés en cascode à point milieu (totem pole).

Ces convertisseurs sont généralement utilisés pour leur efficacité à corriger le facteur de puissance (Power Factor Corrector - PFC).

Le document US2015/131343 A1 divulgue un convertisseur AD/DC, par lequel une tension de courant continu est fournie à travers un condensateur.

### Résumé

Il existe un besoin d'améliorer les convertisseurs totem pole.

Un mode de réalisation propose une architecture de convertisseur totem pole réversible.

Un mode de réalisation propose une solution compatible avec une limitation du courant d'appel.

Ainsi, un mode de réalisation prévoit un convertisseur alternatif-continu réversible, comportant :
un premier transistor à effet de champ et un deuxième transistor à effet de champ en série entre une première borne et une deuxième borne destinées à une tension continue ;
un élément inductif reliant un premier point milieu de l'association en série des deux transistors à une première borne destinée à une tension alternative ; et
un premier triac et un deuxième triac en série entre les bornes de tension continue, un deuxième point milieu de l'association en série des deux triacs étant relié à une deuxième borne destinée à la tension alternative.

Selon un mode de réalisation :
une première diode est en parallèle avec le premier transistor, anode côté premier point milieu ; et
une deuxième diode est en parallèle avec le deuxième transistor, cathode côté premier point milieu.

Selon un mode de réalisation, chaque diode est définie par la diode intrinsèque drain-source du transistor concerné.

Selon un mode de réalisation, une gâchette de chaque triac est côté deuxième point milieu.

Selon un mode de réalisation, une gâchette de chaque triac est du côté de la borne de la tension continue à laquelle est connectée le triac concerné.

Selon un mode de réalisation :
une gâchette du premier triac est côté deuxième point milieu ; et
une gâchette du deuxième triac est côté deuxième borne de tension continue.

Un mode de réalisation prévoit un procédé de commande d'un convertisseur, dans lequel :
le deuxième triac est rendu passant de façon continue pendant des alternances d'un premier signe de la tension alternative ; et
le premier triac est rendu passant de façon continue pendant des alternances d'un deuxième signe de la tension alternative.

Selon un mode de réalisation, dans un mode de conversion alternatif-continu :
le deuxième transistor est commandé de façon impulsionnelle pendant les alternances du premier signe ; et
le premier transistor est commandé de façon impulsionnelle pendant les alternances du deuxième signe.

Selon un mode de réalisation, la première diode sert de diode de roue-libre.

Selon un mode de réalisation, dans un mode de conversion continu-alternatif :
le premier transistor est commandé de façon impulsionnelle pendant les alternances du premier signe ; et
le deuxième transistor est commandé de façon impulsionnelle pendant les alternances du deuxième signe.

Selon un mode de réalisation, la deuxième diode sert de diode de roue-libre.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple usuel de convertisseur totem pole alternatif-continu ;
la figure 2 représente, de façon schématique et partielle, en partie sous forme de blocs, un mode de réalisation d'un convertisseur totem pole réversible ;
les figures 3A, 3B, 3C, 3D, 3E, 3F, 3G et 3H illustrent, sous forme de chronogrammes, le fonctionnement du convertisseur de la figure 2 en mode de conversion alternatif-continu ;
les figures 4A, 4B, 4C, 4D, 4E, 4F, 4G et 4H illustrent, sous forme de chronogrammes, le fonctionnement du convertisseur de la figure 2 en mode de conversion continu-alternatif ;
la figure 5 représente, de façon plus détaillée, un mode de réalisation du convertisseur totem pole réversible de la figure 2 ;
la figure 6 représente, de façon schématique et partiellement sous forme de blocs, un autre mode de réalisation d'un convertisseur totem pole réversible ;
la figure 7 représente, de façon schématique et partiellement sous forme de blocs, un autre mode de réalisation d'un convertisseur totem pole réversible ; et
la figure 8 représente, de façon schématique et partiellement sous forme de blocs, un mode de réalisation d'un circuit de génération de tensions continues de circuits de commande d'un convertisseur totem pole réversible.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, l'application finale du convertisseur n'a pas été détaillée, les modes de réalisation décrits étant compatibles avec les applications usuelles des convertisseurs alternatif-continu, continu-alternatif ou réversibles.

Sauf précision contraire, lorsque l'on fait référence à deux éléments connectés entre eux, cela signifie directement connectés sans élément intermédiaire autre que des conducteurs, et lorsque l'on fait référence à deux éléments reliés entre eux, cela signifie que ces deux éléments peuvent être directement reliés (connectés) ou reliés par l'intermédiaire d'un ou plusieurs autres éléments.

Dans la description qui suit, les expressions "approximativement", "sensiblement", et "de l'ordre de" signifient à 10 % près, de préférence à 5 % près.

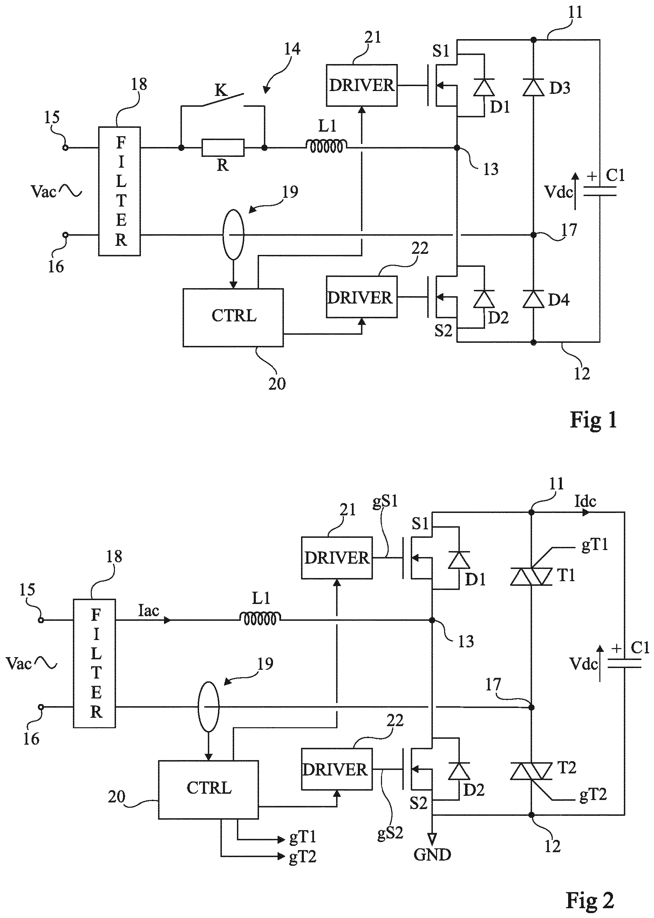

La figure 1 est un schéma électrique d'un exemple usuel de convertisseur totem pole, alternatif-continu.

Un convertisseur totem pole est basé sur l'utilisation de deux transistors MOS (ici à canal N) S1 et S2, connectés en série entre deux bornes 11 et 12 de fourniture d'une tension continue Vdc. Le drain du transistor S1 est côté borne 11 et la source du transistor S2 est côté borne 12. Un élément de stockage C1 (condensateur ou batterie par exemple) de l'énergie continue relie les bornes 11 et 12, la borne 11 étant, arbitrairement, la borne positive de la tension Vdc. Le point milieu 13 entre les deux transistors S1 et S2 est relié, par l'intermédiaire d'un élément inductif L1 en série avec un circuit 14 de limitation du courant d'appel et des pertes en régime établi, à une première borne 15 d'application d'une tension alternative Vac. Le circuit 14 est, par exemple, une résistance R (à coefficient de température positif PTC ou négatif NTC) en parallèle avec un interrupteur K. La résistance R limite le courant d'appel au démarrage et l'interrupteur K court-circuite la résistance en régime établi pour limiter les pertes résistives une fois l'équilibre de tension atteint. Une deuxième borne 16 d'application de la tension alternative Vac est reliée au point milieu 17 d'une association en série de deux diodes D3 et D4 connectées entre les bornes 11 et 12. Les anodes des diodes D3 et D4 sont respectivement côté point 17 et côté borne 12.

En pratique, les bornes 15 et 16 correspondent à des bornes de raccordement au réseau de distribution électrique et un filtre d'entrée 18 (FILTER), ou filtre secteur, est intercalé entre d'une part la borne 15 et le circuit 14 et, d'autre part, la borne 16 et la point 17. Un élément 19 de mesure du courant alternatif est intercalé entre le filtre 18 et le point 17. L'information représentative du courant, mesuré par l'élément 19, est exploitée par un circuit 20 de commande (CTRL) des périodes de conduction des transistors S1 et S2. Le circuit 20 reçoit d'autres informations comme, par exemple, une information représentative de la tension Vdc, une information représentative des besoins en énergie de la charge connectée aux bornes 11 et 12, etc. Le circuit 20 fournit des signaux de commande à des circuits (DRIVER) 21 et 22 de génération de signaux de commande des grilles des transistors respectifs S1 et S2. En figure 1, on a également représenté les diodes intrinsèques source-drain D1 et D2 des transistors S1 et S2. Les transistors S1 et S2 sont commandés en modulation de largeur d'impulsions en fonction des besoins de la charge connectée aux bornes 11 et 12. La fréquence des impulsions est généralement fixe et est nettement supérieure (ratio d'au moins 100, par exemple de quelques kHz à quelques centaines de kHz) à la fréquence de la tension Vac (généralement moins de 100 Hz, typiquement 50 Hz ou 60 Hz pour le réseau de distribution d'électricité).

Le fonctionnement du convertisseur totem pole de la figure 1 est le suivant. Pour simplifier, on ne tient pas compte de la présence du filtre 18 mais celui-ci est bien entendu traversé par le courant depuis les bornes 15 et 16 et vers ces bornes.

Pendant les alternances positives de la tension Vac, le transistor S2 est commandé en modulation de largeur d'impulsions pour être périodiquement fermé (passant) et le transistor S1 reste en permanence ouvert (bloqué). Par ailleurs, la diode source-drain D2 du transistor S2 se trouve polarisée en inverse tandis que la diode source-drain D1 du transistor S1 se trouve polarisée en direct et sert de diode de roue libre. Pendant les impulsions de fermeture du transistor S2, l'inductance L1 accumule de l'énergie. La circulation du courant s'effectue, depuis la borne 15, via l'inductance L1, le transistor S2 et la diode D4 jusqu'à la borne 16. La charge continue connectée aux bornes 11 et 12 est alimentée par l'énergie emmagasinée dans l'élément de stockage d'énergie C1 (condensateur ou batterie). A chaque ouverture du transistor S2, l'énergie emmagasinée dans l'inductance L1 est transférée à la charge continue. La circulation du courant s'effectue alors depuis l'inductance L1, via la diode D1 du transistor S1 jusqu'à la borne positive 11, puis de la borne négative 12, via la diode D4 jusqu'à la borne 16 pour reboucler sur l'inductance L1. Dans certains cas, la diode D1 est une diode en parallèle sur le transistor S1.

Pendant les alternances négatives de la tension Vac, le transistor S1 est commandé en modulation de largeur d'impulsions pour être périodiquement fermé (passant) et le transistor S2 reste en permanence ouvert (bloqué). Par ailleurs, la diode source-drain D1 du transistor S1 se trouve polarisée en inverse tandis que la diode source-drain D2 du transistor S2 se trouve polarisée en direct et sert de diode de roue libre. Pendant les impulsions de fermeture du transistor S1, l'inductance L1 accumule de l'énergie. La circulation du courant s'effectue, depuis la borne 16, via la diode D3, le transistor S1 et l'inductance L1 jusqu'à la borne 15. La charge continue connectée aux bornes 11 et 12 est alimentée par l'énergie emmagasinée dans l'élément de stockage d'énergie C1. A chaque ouverture du transistor S2, l'énergie emmagasinée dans l'inductance L1 est transférée à la charge continue. La circulation du courant s'effectue alors depuis l'inductance L1, via les bornes 15 puis 16, la diode D3, jusqu'à la borne positive 11, puis de la borne négative 12, via la diode D2 jusqu'à l'inductance L1.

Le circuit de limitation du courant d'appel 14 sert avant chaque impulsion de fermeture d'un des transistors S1 et S2, en particulier lorsque l'on s'éloigne du zéro de tension de la tension Vac. En effet, la tension aux bornes du transistor S1 ou S2 lors de sa fermeture est d'autant plus important que l'on est proche du milieu de l'alternance correspondante, ce qui, sans circuit de limitation, provoquerait un pic de courant. L'ouverture de l'interrupteur K, de façon impulsionnelle, avant chaque début d'impulsion de fermeture des transistors S1 et S2 afin que la résistance R limite le courant de charge du condensateur C1, évite ces pics de courant, en particulier vers le milieu de chaque alternance.

Le convertisseur de la figure 1 est unidirectionnel, c'est-à-dire qu'il ne peut fonctionner qu'en convertisseur alternatif-continu (mode redresseur ou "rectifier"). Dans certaines applications, on souhaite disposer d'un convertisseur réversible, c'est-à-dire capable de fonctionner également en convertisseur continu-alternatif. Cela sert par exemple à réinjecter de l'énergie dans le réseau de distribution électrique ou à alimenter un moteur à partir d'une batterie. Le convertisseur doit alors être capable de fonctionner en onduleur ("inverter").

Les modes de réalisation décrits prévoient de tirer profit des avantages d'une architecture totem pole et de son rendement pour réaliser un convertisseur réversible.

Un exemple d'application d'un convertisseur réversible est de permettre, avec le même convertisseur, à la fois d'alimenter une charge à partir du réseau de distribution électrique et d'injecter de l'énergie sur le réseau lorsque la charge ne consomme pas.

Un autre exemple d'application d'un convertisseur réversible est de permettre, avec le même convertisseur, à la fois d'alimenter un moteur (transfert d'énergie électrique-mécanique) à partir d'une batterie et de recharger la batterie (transfert d'énergie mécanique-électrique) à partir de la rotation de moteur.

On pourrait penser utiliser des transistors MOS à la place des diodes D3 et D4 afin de rendre la structure bidirectionnelle. Toutefois, le besoin de limiter le courant d'appel rend cette solution très contraignante en termes de commande des transistors MOS et d'encombrement et de fiabilité du circuit de limitation des pertes en régime établi. Le circuit 14 de limitation du courant d'appel est de plus indispensable.

On pourrait également penser utiliser des thyristors à la place des diodes D3 et D4. Toutefois, cela ne suffirait pas à rendre le convertisseur bidirectionnel.

La figure 2 représente, de façon schématique et partielle, en partie sous forme de blocs, un mode de réalisation d'un convertisseur totem pole réversible.

On retrouve une structure totem pole de deux transistors à effet de champ S1 et S2, par exemple des transistors MOS (ici à canal N), connectés en série entre deux bornes 11 et 12 d'une tension continue Vdc. Le drain du transistor S1 est côté borne 11 et la source du transistor S2 est côté borne 12. Un élément de stockage C1 (condensateur ou batterie par exemple) de l'énergie continue relie les bornes 11 et 12, la borne 11 étant, arbitrairement, la borne positive de la tension Vdc.

Le point milieu 13 entre les deux transistors S1 et S2 est relié, par l'intermédiaire d'un élément inductif L1, à une première borne 15 d'une tension alternative Vac. Selon les modes de réalisation décrits, on prévoit de remplacer les diodes D3 et D4 de la figure 1 par des triacs. Ainsi, une deuxième borne 16 de la tension alternative Vac est reliée au point milieu 17 d'une association en série de deux triacs T1 et T2 connectés entre les bornes 11 et 12. Dans l'exemple de la figure 2, les gâchettes gT1 et GT2 des triacs T1 et T2 sont respectivement côté borne 11 et côté borne 12.

Comme on le verra par la suite, grâce à la solution proposée, un circuit de limitation du courant d'appel (14, figure 1) n'est pas nécessaire.

Les bornes 15 et 16 correspondent par exemple à des bornes de raccordement au réseau de distribution électrique ou aux bornes d'un moteur, etc., et un filtre d'entrée 18 (FILTER), ou filtre secteur, est de préférence intercalé entre d'une part la borne 15 et le noeud 13 et, d'autre part, la borne 16 et le point 17. Un élément 19 de mesure du courant alternatif est intercalé entre le filtre 18 et le point 17. L'information représentative du courant, mesuré par l'élément 19, est exploitée par un circuit 20 de commande (CTRL) des périodes de conduction des transistors S1 et S2 et des triacs T1 et T2. Le circuit 20 reçoit d'autres informations comme, par exemple, une information représentative de la tension Vdc, une information représentative, en mode redresseur, des besoins de la charge continue connectée aux bornes 11 et 12, etc. Le circuit 20 fournit des signaux de commande à des circuits (DRIVER) 21 et 22 de génération de signaux de commande des grilles gS1 et gS2 des transistors respectifs S1 et S2 ainsi que, directement ou indirectement, des signaux de commande aux gâchettes gT1 et gT2 des triacs T1 et T2. En figure 2, on a également représenté les diodes intrinsèques source-drain D1 et D2 des transistors S1 et S2. En variante, les diodes D1 et D2 peuvent être des composants additionnels. Selon une autre variante, on rend le transistor S1 ou S2 passant pendant les périodes où le courant doit circuler dans la diode D1, respectivement D2. Cela permet de réduire les pertes en conduction par rapport à une circulation de courant dans la diode intrinsèque D1 ou D2. Les transistors S1 et S2 sont commandés en modulation de largeur d'impulsions. La fréquence des impulsions est généralement fixe et est nettement supérieure (ratio d'au moins 100, par exemple de quelques kHz à quelques centaines de kHz) à la fréquence de la tension Vac (généralement moins de 100 Hz, typiquement 50 Hz ou 60 Hz pour le réseau de distribution d'électricité). Le convertisseur n'effectue ni élévation, ni diminution de la tension que ce soit dans un sens ou dans un autre. On ne se préoccupe ici que de la conversion alternative- continue et inversement. Le cas échéant, d'autres systèmes de conversion et de régulation sont présents en amont ou en aval pour réaliser une diminution ou une augmentation des valeurs des tensions Vac et Vdc.

L'utilisation de triacs dans une architecture totem pole semble à première vue inutile en raison de la présence des transistors S1 et S2. Cependant, comme il ressort des modes de réalisation ci-dessous, l'utilisation de deux triacs à la place de deux diodes permet non seulement d'éviter le circuit de limitation du courant d'appel, mais également de rendre le convertisseur réversible avec une commande particulièrement simple.

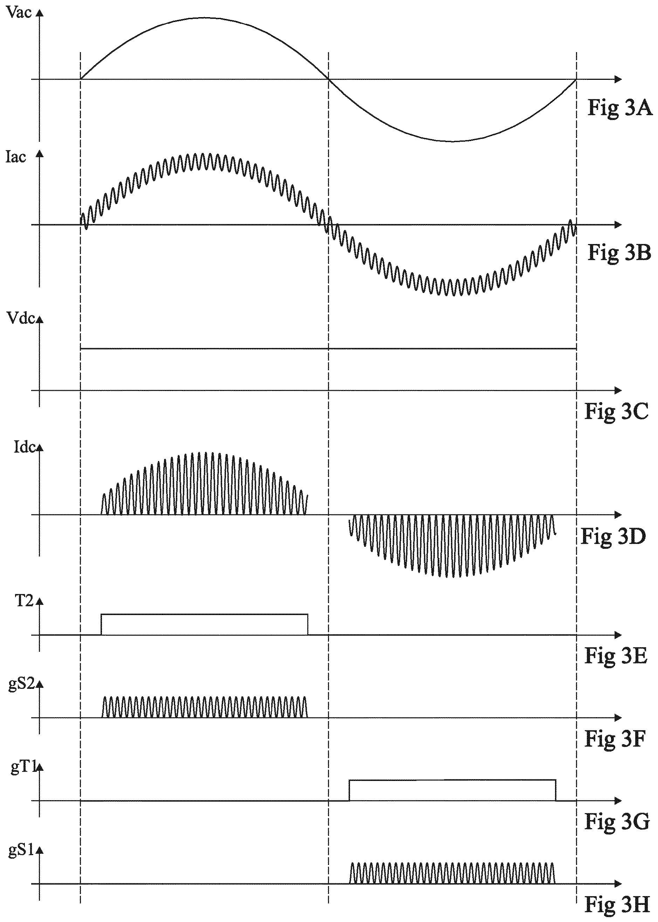

Les figures 3A, 3B, 3C, 3D, 3E, 3F, 3G et 3H illustrent, sous forme de chronogrammes, le fonctionnement du convertisseur de la figure 2 en mode de conversion alternatif-continu au cours d'une période de la tension alternative Vac.

La figure 3A représente un exemple d'allure de la tension Vac entre les bornes 15 et 16 (tension de ligne ou moteur) . La figure 3B représente un exemple correspondant d'allure du courant Iac (courant de ligne ou moteur). La figure 3C représente un exemple d'allure correspondante de la tension Vdc entre les bornes 11 et 12 (tension de batterie ou du condensateur C1). La figure 3D représente un exemple correspondant d'allure du courant Idc côté tension continue. La figure 3E représente un exemple de périodes de fermeture du triac T2. La figure 3F représente un exemple d'allure correspondante de la tension de grille gS2 du transistor S2. La figure 3G représente un exemple de périodes de fermeture du triac T1. La figure 3H représente un exemple d'allure correspondante de la tension de grille gS1 du transistor S1.

On se place en régime établi, c'est-à-dire que l'on considère que le condensateur C1 est au niveau de charge requis par l'application. Le fonctionnement au démarrage est similaire mais la tension Vdc croit progressivement sur plusieurs alternances jusqu'à atteindre son niveau nominal fixé par l'application. Pour simplifier les explications, on néglige la présence du filtre 18 dans ce qui suit.

En mode de conversion alternatif-continu, le triac T2 est rendu passant pendant les alternances positives de la tension Vac tandis que le triac T1 est rendu passant pendant les alternances négatives de la tension alternative. Toutefois, à la différence des diodes D3 et D4 du cas classique de la figure 1, la mise en conduction des triacs T1 et T2 ne dépend pas des périodes de conduction des transistors S1 et S2, mais est forcée pendant le maximum de la durée possible des alternances positives et négatives. Cette durée couvre au moins toute la durée du train d'impulsions de commande des transistors S1 et S2, et est fixé par la demi-période de la tension alternative. Ainsi, la fermeture du transistor S1 ou S2 (selon l'alternance de la tension Vac) s'effectue alors que la tension à ses bornes est approximativement nulle. La commande des transistors S1 et S2 n'est pas modifiée par les modes de réalisation décrits. On notera qu'un triac se bloque, à défaut de commande, quand le courant qui le traverse s'annule (devient inférieur à son courant de maintien). Ainsi, en raison de la discontinuité du courant pendant chaque alternance, afin d'éviter un blocage intempestif du triac T1 ou T2, la commande est maintenue pendant approximativement toute la durée d'une alternance (négative pour le triac T1 et positive pour la triac T2). La commande du triac concerné est interrompue à la fin de l'alternance.

Pendant les alternances positives de la tension Vac, le transistor S2 est commandé en modulation de largeur d'impulsions pour être périodiquement fermé (passant) et le transistor S1 reste en permanence ouvert (bloqué). Par ailleurs, la diode source-drain D2 du transistor S2 se trouve polarisée en inverse tandis que la diode source-drain D1 du transistor S1 se trouve polarisée en direct et sert de diode de roue libre. Pendant les impulsions de fermeture du transistor S2, l'inductance L1 accumule de l'énergie. La circulation du courant s'effectue, depuis la borne 15, via l'inductance L1, le transistor S2 et le triac T2 jusqu'à la borne 16. La charge continue connectée aux bornes 11 et 12 est alimentée par l'énergie emmagasinée dans l'élément de stockage d'énergie C1 (condensateur ou batterie). A chaque ouverture du transistor S2, l'énergie emmagasinée dans l'inductance L1 est transférée à la charge continue. La circulation du courant s'effectue alors depuis l'inductance L1, via la diode D1 du transistor S1 jusqu'à la borne positive 11, puis de la borne négative 12, via le triac T2 jusqu'à la borne 16 pour reboucler sur l'inductance L1.

Pendant les alternances négatives de la tension Vac, le transistor S1 est commandé en modulation de largeur d'impulsions pour être périodiquement fermé (passant) et le transistor S2 reste en permanence ouvert (bloqué). Par ailleurs, la diode source-drain D1 du transistor S1 se trouve polarisée en inverse tandis que la diode source-drain D2 du transistor S2 se trouve polarisée en direct et sert de diode de roue libre. Pendant les impulsions de fermeture du transistor S1, l'inductance L1 accumule de l'énergie. La circulation du courant s'effectue, depuis la borne 16, via le triac T1, le transistor S1 et l'inductance L1 jusqu'à la borne 15. La charge continue connectée aux bornes 11 et 12 est alimentée par l'énergie emmagasinée dans l'élément de stockage d'énergie C1. A chaque ouverture du transistor S2, l'énergie emmagasinée dans l'inductance L1 est transférée à la charge continue. La circulation du courant s'effectue alors depuis l'inductance L1, via les bornes 15 puis 16, le triac T1, jusqu'à la borne positive 11, puis de la borne négative 12, via la diode D2 jusqu'à l'inductance L1.

L'utilisation de triacs T1 et T2 présente un autre avantage qui est de permettre un fonctionnement en onduleur, c'est-à-dire en conversion continu-alternatif. On tire ici profit du fait que les triacs sont bidirectionnels.

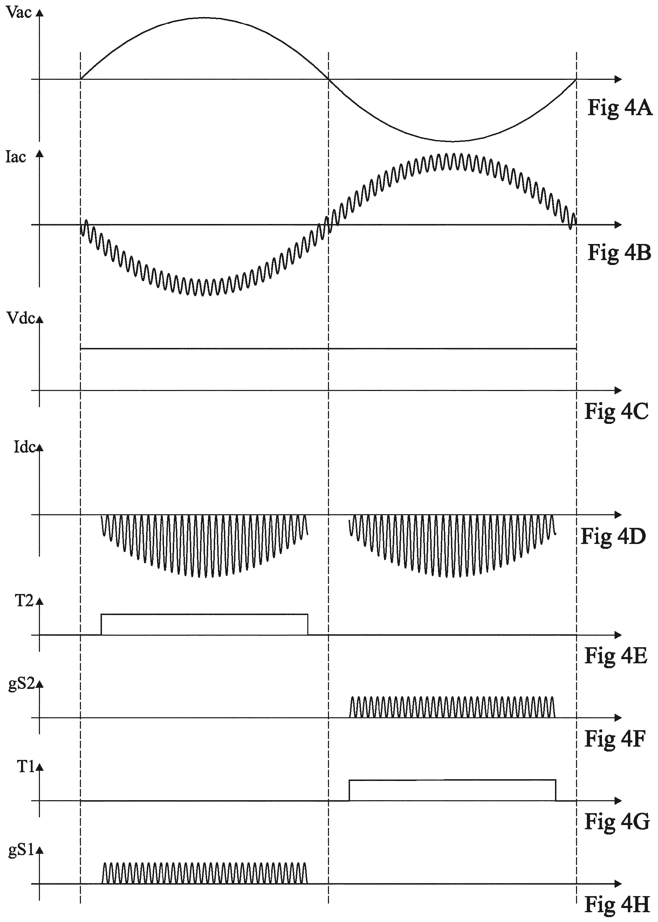

Les figures 4A, 4B, 4C, 4D, 4E, 4F, 4G et 4H illustrent, sous forme de chronogrammes, le fonctionnement du convertisseur de la figure 2 en mode de conversion continu-alternatif au cours d'une période de la tension alternative Vac.

La figure 4A représente un exemple d'allure de la tension Vac entre les bornes 15 et 16 (tension de ligne ou moteur) . La figure 4B représente un exemple correspondant d'allure du courant Iac (courant de ligne ou moteur). La figure 4C représente un exemple d'allure correspondante de la tension Vdc entre les bornes 11 et 12 (tension de batterie ou du condensateur C1). La figure 4D représente un exemple correspondant d'allure du courant Idc côté tension continue. La figure 4E représente un exemple de périodes de fermeture du triac T2. La figure 4F représente un exemple d'allure correspondante de la tension de grille gS2 du transistor S2. La figure 4G représente un exemple de périodes de fermeture du triac T1. La figure 4H représente un exemple d'allure correspondante de la tension de grille gS1 du transistor S1.

En mode onduleur, la question du régime établi de la tension Vdc ne se pose pas. En effet, il s'agit ici de transférer de l'énergie de la source continue (batterie chargée par exemple) à la charge alternative.

Pour fonctionner en onduleur, c'est-à-dire par exemple réinjecter de l'énergie sur le réseau de distribution électrique ou alimenter un moteur, le sens de circulation du courant dans le convertisseur doit être inversé par rapport au cas du convertisseur alternatif-continu. Ainsi, avec les mêmes conventions de signe, le courant Idc est tout le temps négatif. Par ailleurs, le signe du courant Iac est inversé par rapport au signe de la tension Vac, c'est-à-dire qu'il est négatif pendant les alternances positives et positif pendant les alternances négatives.

Comme pour le mode redresseur, le triac T2 est rendu passant, de façon continue, pendant les alternances positives de la tension alternative Vac tandis que le triac T1 est rendu passant, de façon continue, pendant les alternances négatives de la tension alternative Vac. Toutefois, côté transistors S1 et S2, à la différence du mode redresseur, le transistor S1 est commandé pendant les alternances positives et le transistor S2 est commandé pendant les alternances négatives de la tension Vac. Les transistors S1 et S2 sont toujours commandés, de façon impulsionnelle, de préférence en modulation de largeur d'impulsions si la charge alternative est susceptible de varier (par exemple dans le cas d'un moteur).

Pendant les alternances positives de la tension Vac, le transistor S1 est commandé en modulation de largeur d'impulsions pour être périodiquement fermé (passant) et le transistor S2 reste en permanence ouvert (bloqué). Par ailleurs, la diode source-drain D1 du transistor S1 se trouve polarisée en inverse tandis que la diode source-drain D2 du transistor S2 se trouve polarisée en direct et sert de diode de roue libre. Pendant les impulsions de fermeture du transistor S1, l'inductance L1 accumule de l'énergie. La circulation du courant s'effectue, depuis la borne 11, via le transistor S1 et l'inductance L1 jusqu'à la borne 15, puis de la borne 16, via le triac T2 jusqu'à la borne 12. A chaque ouverture du transistor S1, l'énergie emmagasinée dans l'inductance L1 est transférée au réseau alternatif (ou au moteur). La circulation du courant s'effectue alors depuis l'inductance L1 vers la borne 15, puis de la borne 16, via le triac T2 et la diode D2 jusqu'à l'inductance L1.

Pendant les alternances négatives de la tension Vac, le transistor S2 est commandé en modulation de largeur d'impulsions pour être périodiquement fermé (passant) et le transistor S1 reste en permanence ouvert (bloqué). Par ailleurs, la diode source-drain D2 du transistor S2 se trouve polarisée en inverse tandis que la diode source-drain D1 du transistor S1 se trouve polarisée en direct et sert de diode de roue libre. Pendant les impulsions de fermeture du transistor S2, l'inductance L1 accumule de l'énergie. La circulation du courant s'effectue, depuis la borne 11, via le triac T1 jusqu'à la borne 16, puis depuis la borne 15, via l'inductance L1 et le transistor S2 jusqu'à la borne 12. A chaque ouverture du transistor S2, l'énergie emmagasinée dans l'inductance L1 est transférée au réseau alternatif. La circulation du courant s'effectue alors depuis l'inductance L1, via la diode D1, le triac T1 jusqu'à la borne 16, se reboucle par la borne 15 dans l'inductance L1.

Par rapport au mode redresseur, on veille à chaque fin d'alternance, à arrêter les impulsions de commande des transistors S1 et S2 suffisamment tôt pour garantir que le courant Iac soit nul à la fin de l'alternance.

Les applications plus particulièrement visées sont des applications dans lesquelles les tensions Vac et Vdc ont des amplitudes supérieures à 100 volts. Or, les signaux de commande des transistors S1 et S2 et des triacs T1 et T2 présentent des amplitudes allant de quelques volts à 10-20 volts. Par conséquent, on doit prévoir des circuits de génération de ces signaux de commande ayant des références de tension appropriées.

Les figures suivantes font ressortir les connexions et potentiels d'alimentation requis pour les signaux de commande des transistors et triacs dans différents modes de réalisation.

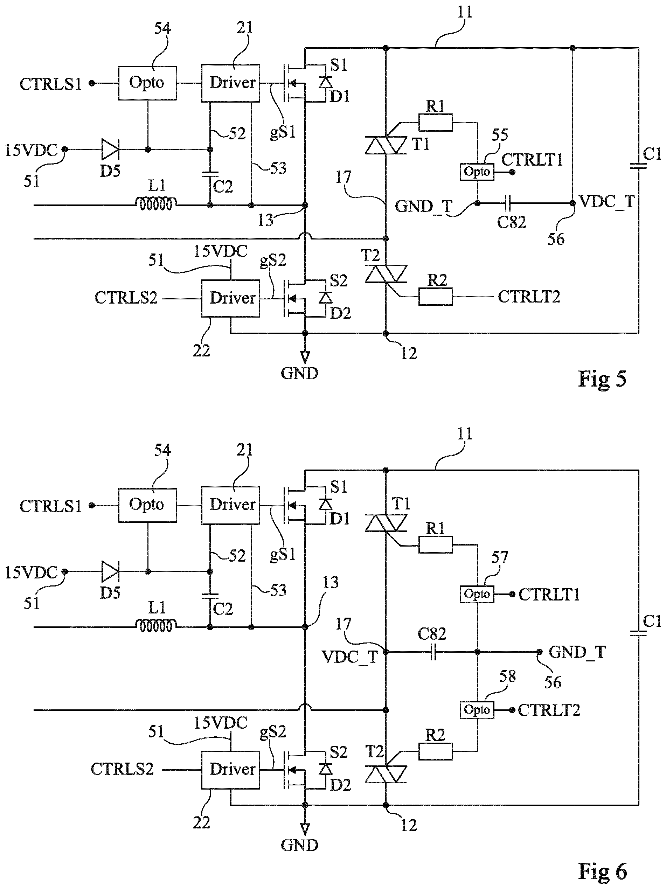

La figure 5 représente, de façon plus détaillée, un mode de réalisation du convertisseur totem pole réversible de la figure 2.

Côté transistor S2, sa source étant la masse GND (potentiel de la borne 12), le potentiel de référence de son signal de commande de grille gS2 peut être également la masse GND. Le circuit 22 est, par exemple, alimenté par une tension positive 15VDC (borne 51), de 15 volts, référencée à la masse GND et reçoit un signal numérique basse tension CTRLS2 (de quelques volts, par exemple 3-5 volts) du circuit 20 (par exemple, un microcontrôleur) .

Côté transistor S1, la tension de la borne 11 est trop élevée pour autoriser une commande gS1 référencée à la masse GND. Dans l'exemple de la figure 5, on prévoit de référencer la tension d'alimentation, par exemple 15 volts, du circuit 21 au noeud 13. Comme le noeud 13 correspond à la source du transistor S1, on garantit ainsi une tension grille-source positive quel que soit le potentiel du noeud 13 (qui évolue avec la tension Vac). Un potentiel 15VDC de 15 volts (référencé à la masse GND) est appliqué sur l'anode d'une diode D5 dont la cathode est reliée à une borne 52 d'application du potentiel d'alimentation positif du circuit 21. Une borne 53 d'application du potentiel de référence du circuit 21 est connectée au noeud 13. Un condensateur C2 relie la cathode de la diode D5 au noeud 13 pour adapter la référence de la tension de 15 volts alimentant le circuit 21. En raison du changement de référence de tension, un signal de commande basse tension CTRLS1, fourni par le circuit 20, est appliqué par l'intermédiaire d'un optocoupleur 54 (Opto) dont les bornes de conduction (l'émetteur et le collecteur du phototransistor bipolaire de sortie) sont respectivement reliées à la borne 52 et à une borne d'entrée de commande du circuit 21. Le signal CTRLS1 est appliqué sur la borne de commande de l'optocoupleur (l'anode de sa photodiode) en étant référencé à la masse GND.

Côté triac T1, un courant de gâchette du triac T1 est injecté par le transistor d'un optocoupleur 55 (Opto) dont les bornes de conduction (émetteur et collecteur du phototransistor) sont connectées à une électrode d'un condensateur C82 définissant une masse flottante GNT T d'une alimentation continue (par exemple, de l'ordre de 15 volts) isolée (flottante) et, par une résistance R1, à la gâchette du triac T1. Une autre électrode du condensateur C82 est connecté à une borne 56 d'application du potentiel positif flottant VDC T de l'alimentation continue isolée référencée au potentiel GND_T. Dans l'exemple de la figure 5, les bornes 11 et 56 sont confondues. Le courant de gâchette est donc extrait du triac T1. En variante, on inverse les bornes VDC T et GND_T et le courant de gâchette est injecté dans le triac T1. Un signal de commande basse tension CTRLT1, fourni par le circuit 20, est appliqué sur la borne de commande de l'optocoupleur 55 (l'anode de sa photodiode) en étant référencé à la masse GND.

Côté triac T2 dont une des électrodes est connectée à la masse GND, un courant de gâchette peut être injecté directement en provenant du circuit 20 par application d'un signal de commande basse tension CTRLT2, par l'intermédiaire d'une résistance R2.

La figure 6 représente, de façon schématique et partiellement sous forme de blocs, un autre mode de réalisation d'un convertisseur totem pole réversible.

Par rapport au schéma de la figure 5, les gâchettes des triacs T1 et T2 sont côté point 17.

On utilise alors deux optocoupleurs 57 et 58 (Opto) dont les bornes de commande (photodiodes) respectives reçoivent les signaux basse tension CTRLT1 et CTRLT2 fournis par le circuit 20 (non représenté en figure 6) et référencés à la masse GND.

Dans l'exemple de la figure 6, on suppose que l'on souhaite extraire les courants de gâchette des triacs T1 et T2. Les bornes de conduction (l'émetteur et le collecteur du phototransistor) des optocoupleurs 57 et 58 sont respectivement reliées, par l'intermédiaire des résistances R1 et R2, aux gâchettes des triacs T1 et T2 et à une borne 56 d'application de la masse flottante GND T de l'alimentation continue isolée. Dans cette réalisation, le potentiel positif flottant VDC_T (par exemple, de l'ordre de 15 volts) correspond au potentiel du point 17, le condensateur C82 reliant le point 17 et la borne 56. Le reste du montage est identique à celui de la figure 5.

En variante, la relation entre les potentiels des bornes 56 (VDC_T) et 17 (GND_T) est inversée et les courants de gâchette des triacs T1 et T2 sont injectés dans les gâchettes au lieu d'être extraits des gâchettes.

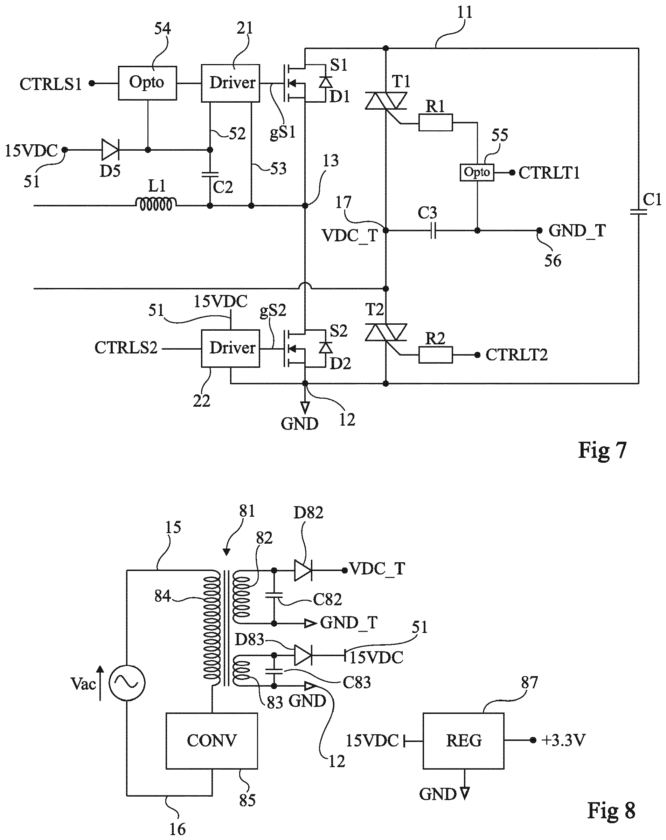

La figure 7 représente, de façon schématique et partiellement sous forme de blocs, un autre mode de réalisation d'un convertisseur totem pole réversible.

Par rapport au mode de réalisation de la figure 6, la gâchette du triac T2 est côté borne 12 (comme en figure 5) . Le signal CTRLT2 peut donc y être appliqué directement.

La figure 8 représente, de façon schématique et partiellement sous forme de blocs, un mode de réalisation d'un circuit de génération de tensions continues de circuits de commande d'un convertisseur totem pole réversible.

Cette figure illustre un exemple de montage de génération des potentiels VDC_T, GND_T et 15VDC à partir de la tension alternative Vac.

On utilise un transformateur 81 à deux enroulements secondaires 82 et 83. Un enroulement primaire 84 du transformateur est relié, le cas échéant par l'intermédiaire du filtre 18 (figure 2), entre la borne 15 (figure 2) et une borne d'un convertisseur à découpage 85 (CONV), par exemple un circuit intégré connu sous la dénomination commerciale VIPER, dont l'autre borne est reliée, le cas échéant par l'intermédiaire du filtre 18 (figure 2), à la borne 16 (figure 2).

Le premier enroulement secondaire 82 du transformateur 81 fournit la tension flottante (par exemple de l'ordre de 15 volts) VDC_T-GND_T. Pour cela, une première borne de l'enroulement

82 définit le potentiel GND_T et est reliée à l'optocoupleur 55 dans le mode de réalisation de la figure 5 ou à la borne 56 dans les modes de réalisation des figures 6 et 7. Une deuxième borne de l'enroulement 82 est reliée en entrée (anode) d'un élément de redressement D82 (par exemple, une diode) et un condensateur C82 relie les deux bornes de l'enroulement 82. La sortie (cathode) de l'élément de redressement D82 définit le potentiel VDC_T et est reliée à la borne 56 dans le mode de réalisation de la figure 5 ou au point 17 dans les modes de réalisation des figures 6 et 7.

Le deuxième enroulement secondaire 83 du transformateur 81 fournit la tension 15VDC-GND. Pour cela, une première borne de l'enroulement 83 définit le potentiel GND et est reliée à la borne 12 (figures 5 à 7). Une deuxième borne de l'enroulement 83 est reliée en entrée (anode) d'un élément de redressement D83 (par exemple, une diode) et un condensateur C83 relie les deux bornes de l'enroulement 83. La sortie (cathode) de l'élément de redressement D83 définit le potentiel 15VDC et est reliée à la borne 51 (figures 5 à 7).

Les amplitudes des tensions VDC_T-GND_ T et 15VDC-GND dépendent des rapports de transformation des enroulements 82 et 83 par rapport à l'enroulement 84.

La tension 15VDC-GND peut servir à générer la basse tension (par exemple, de 3,3 volts) référencée à la masse GND pour le circuit ou microcontrôleur 20. Pour cela, on utilise, par exemple, un régulateur linéaire 87 (REG).

Un avantage des modes de réalisation décrits est que le convertisseur totem pole ainsi réalisé est particulièrement performant. En particulier, on s'affranchit du besoin d'un circuit de limitation du courant d'appel, tout en obtenant un convertisseur réversible.

Des modes de réalisation particuliers ont été décrits. Diverses variantes et modifications apparaîtront à l'homme de l'art. En particulier, le choix du montage parmi ceux des figures 5 à 7 dépend de l'application et du circuit utilisé pour générer les tensions de commande. En effet, le circuit de la figure 8 n'est qu'un exemple et on pourra en variante utiliser des tensions présentes dans le reste de l'application. En outre, la mise en oeuvre pratique des modes de réalisation et le dimensionnement des composants est à la portée de l'homme du métier à partir de la description fonctionnelle donnée ci-dessus.

## Revendications

1. Convertisseur alternatif-continu réversible, comportant :
un premier transistor à effet de champ (S1) et un deuxième transistor à effet de champ (S2) en série entre une première borne (11) et une deuxième borne (12) destinées à une tension continue (Vdc) ;
un élément inductif (L1) reliant un premier point milieu (13) de l'association en série des deux transistors à une première borne (15) destinée à une tension alternative (Vac) ; et
un premier triac (T1) et un deuxième triac (T2) en série entre les bornes de tension continue, un deuxième point milieu (17) de l'association en série des deux triacs étant relié à une deuxième borne (16) destinée à la tension alternative.

2. Convertisseur selon la revendication 1, dans lequel :
une première diode (D1) est en parallèle avec le premier transistor (S1), anode côté premier point milieu (13) ; et
une deuxième diode (D2) est en parallèle avec le deuxième transistor (S2), cathode côté premier point milieu (13).

3. Convertisseur selon la revendication 2, dans lequel chaque diode (D1, D2) est définie par la diode intrinsèque drain-source du transistor (S1, S2) concerné.

4. Convertisseur selon l'une quelconque des revendications 1 à 3, dans lequel une gâchette de chaque triac (T1, T2) est côté deuxième point milieu (17).

5. Convertisseur selon l'une quelconque des revendications 1 à 3, dans lequel une gâchette de chaque triac (T1, T2) est du côté de la borne (11, 12) de la tension continue (Vdc) à laquelle est connectée le triac concerné.

6. Convertisseur selon l'une quelconque des revendications 1 à 3, dans lequel :
une gâchette du premier triac (T1) est côté deuxième point milieu (17) ; et
une gâchette du deuxième triac (T2) est côté deuxième borne (12) de tension continue (Vdc).

7. Procédé de commande d'un convertisseur selon l'une quelconque des revendications 1 à 6, dans lequel :
le deuxième triac (T2) est rendu passant de façon continue pendant des alternances d'un premier signe de la tension alternative (Vac) ; et
le premier triac (T1) est rendu passant de façon continue pendant des alternances d'un deuxième signe de la tension alternative.

8. Procédé selon la revendication 7, dans lequel, dans un mode de conversion alternatif-continu :
le deuxième transistor (S2) est commandé de façon impulsionnelle pendant les alternances du premier signe ; et
le premier transistor (S1) est commandé de façon impulsionnelle pendant les alternances du deuxième signe.

9. Procédé selon la revendication 8, dans son rattachement à la revendication 2 ou 3, dans lequel la première diode (D1) sert de diode de roue-libre.

10. Procédé selon l'une quelconque des revendications 7 à 9, dans lequel, dans un mode de conversion continu-alternatif :
le premier transistor (S1) est commandé de façon impulsionnelle pendant les alternances du premier signe ; et
le deuxième transistor (S2) est commandé de façon impulsionnelle pendant les alternances du deuxième signe.

11. Procédé selon la revendication 10, dans son rattachement à la revendication 2 ou 3, dans lequel la deuxième diode (D2) sert de diode de roue-libre.

## Patentansprüche

1. Umkehrbarer AC-DC-Wandler, der Folgendes aufweist:
einen ersten Feldeffekttransistor (S1) und einen zweiten Feldeffekttransistor (S2) in Reihe zwischen einem ersten Anschluss (11) und einem zweiten Anschluss (12), die für eine Gleichspannung (Vdc) bestimmt sind;
ein induktives Element (L1), das einen ersten Mittelpunkt (13) der Reihenverbindung der beiden Transistoren mit einem ersten Anschluss (15) verbindet, der für eine Wechselspannung (Vac) vorgesehen ist; und
ein erstes Triac (T1) und ein zweites Triac (T2) in Reihe zwischen den Gleichspannungsanschlüssen, wobei ein zweiter Mittelpunkt (17) der Reihenverbindung der beiden Triacs mit einem zweiten Anschluss (16) verbunden ist, der für die Wechselspannung bestimmt ist.

2. Wandler nach Anspruch 1, aufweisend
eine erste Diode (D1) parallel zum ersten Transistor (S1) auf der Anodenseite (13) des ersten Mittelpunkts; und
eine zweite Diode (D2) parallel zum zweiten Transistor (S2) auf der Kathodenseite (13) des ersten Mittelpunkts.

3. Wandler nach Anspruch 2, wobei jede Diode (D1, D2) durch die intrinsische Drain-Source-Diode des jeweiligen Transistors (S1, S2) definiert ist.

4. Wandler nach einem der Ansprüche 1 bis 3, wobei ein Gate jedes Triacs (T1, T2) auf der Seite des zweiten Mittelpunkts (17) liegt.

5. Wandler nach einem der Ansprüche 1 bis 3, wobei sich ein Gate jedes Triacs (T1, T2) auf der Seite des Anschlusses (11, 12) der Gleichspannung (Vdc) befindet, an die das jeweilige Triac angeschlossen ist.

6. Wandler nach einem der Ansprüche 1 bis 3, wobei:
ein Gate des ersten Triacs (T1) auf der Seite des zweiten Mittelpunkts (17) liegt; und
ein Gate des zweiten Triacs (T2) auf der Seite des zweiten Gleichspannungsanschlusses (Vdc) liegt.

7. Verfahren zur Steuerung eines Wandlers nach einem der Ansprüche 1 bis 6, wobei:
das zweite Triac (T2) während der Halbwellen mit einem ersten Vorzeichen der Wechselspannung (Vac) kontinuierlich eingeschaltet wird; und
das erste Triac (T1) während der Halbwellen mit einem zweiten Vorzeichen der Wechselspannung kontinuierlich eingeschaltet wird.

8. Verfahren nach Anspruch 7, wobei in einem AC-DC-Wandlungsmodus
der zweite Transistor (S2) während der Halbwellen mit dem ersten Vorzeichen impulsgesteuert wird; und
der erste Transistor (S1) während der Halbwellen mit einem zweiten Vorzeichen impulsgesteuert wird.

9. Verfahren nach Anspruch 8, in Abhängigkeit von Anspruch 2 oder 3, wobei die erste Diode (D1) als Freilaufdiode dient.

10. Verfahren nach einem der Ansprüche 7 bis 9, wobei in einem DC-AC-Wandlungsmodus
der erste Transistor (S1) während der Halbwellen mit dem ersten Vorzeichen impulsgesteuert wird; und
der zweite Transistor (S2) während der Halbwellen mit dem zweiten Vorzeichen impulsgesteuert wird.

11. Verfahren nach Anspruch 10, in Abhängigkeit von Anspruch 2 oder 3, wobei die zweite Diode (D2) als Freilaufdiode dient.

## Claims

1. Reversible AC-DC converter comprising:
a first field effect transistor (S1) and a second field effect transistor (S2) in series between a first terminal (11) and a second terminal (12) intended for a DC voltage (Vdc);
an inductive element (L1) linking a first midpoint (13) of the association in series of the two transistors to a first terminal (15) intended for an AC voltage (Vac); and
a first triac (T1) and a second triac (T2) in series between the DC voltage terminals, a second midpoint (17) of the association in series of the two triacs being linked to a second terminal (16) intended for the AC voltage.

2. Converter according to claim 1, in which:
a first diode (D1) is in parallel with the first transistor (S1), on the first midpoint anode side (13); and
a second diode (D2) is in parallel with the second transistor (S2), on the first midpoint cathode side (13).

3. Converter according to claim 2, in which each diode (D1, D2) is defined by the drain-source intrinsic diode of the concerned transistor (S1, S2).

4. Converter according to any one of claims 1 to 3, in which a gate of each triac (T1, T2) is on the side of the second midpoint (17).

5. Converter according to any one of claims 1 to 3, in which a gate of each triac (T1, T2) is on the side of the terminal (11, 12) of the DC voltage (Vdc) to which the concerned triac is connected.

6. Converter according to any one of claims 1 to 3, in which:
a gate of the first triac (T1) is on the side of the second midpoint (17); and
a gate of the second triac (T2) is on the side of the second DC voltage (Vdc) terminal (12).

7. Method of controlling a converter according to any one of claims 1 to 6, in which:
the second triac (T2) is continuously switched-on during alternations of a first sign of the AC voltage (Vac); and
the first triac (T1) is continuously switched-on during alternations of a second sign of the AC voltage.

8. Method according to claim 7, in which, in an AC-DC conversion mode:
the second transistor (S2) is pulse controlled during the alternations of the first sign; and
the first transistor (S1) is pulse controlled during the alternations of the second sign.

9. Method according to claim 8, in its dependency on claim 2 or 3, in which the first diode (D1) serves as a freewheeling diode.

10. Method according to any one of claims 7 to 9, in which, in a DC-AC conversion mode:
the first transistor (S1) is pulse controlled during the alternations of the first sign; and
the second transistor (S2) is pulse controlled during the alternations of the second sign.

11. Method according to claim 10, in its dependency on claim 2 or 3, in which the second diode (D2) serves as a freewheeling diode.
